# EUROPEAN PATENT SPECIFICATION

(11) **EP 0 604 237 B1**
(45) Date of publication and mention of the grant of the patent: **21.05.1997**
(21) Application number: 93310520.7
(22) Date of filing: 23.12.1993
(51) Int. Cl.: B60R 19/38

(54) **Vehicle bumper mounting**
Kraftfahrzeugstossfängerbefestigung
Fixation de pare-chocs de véhicule

(30) Priority: 24.12.1992 GB 9226943
(43) Date of publication of application: 29.06.1994
(73) Proprietor: NISSAN EUROPEAN TECHNOLOGY CENTRE LIMITED, Sunderland, Tyne & Wear SR5 3ND (GB)
(72) Inventor: Beveridge, Robert Justin, Wellingborough, Northants NN9 6AR (GB)
(74) Representative: Godwin, Edgar James

(56) References cited:
- EP-A- 0 096 355
- EP-A- 0 158 236
- WO-A-92/11149
- DE-A- 2 844 383
- PATENT ABSTRACTS OF JAPAN vol. 10, no. 81 (M-465) (2138) 29 March 1986 & JP-A-60 222 344 (NISSAN) 6 November 1985

## Description

This invention relates to a bumper mounting for a vehicle including a bumper which is fixed on one end of a chassis frame on which a body is suspended, the bumper having an end portion which extends alongside the body, and mounting means for mounting the end portion of the bumper on the body as specified in the preamble of claim 1 and, for example, as disclosed in the document WO 92/11149.

In a vehicle which does not rely on a monocoque body structure, a chassis frame extends to the front and rear of the vehicle but does not extend to the side extremities of the wheel arch areas. There is sufficient strength in the body structure to support the body panels in these areas. The body has limited freedom of movement relative to the frame. The greatest freedom of movement is in the vertical direction, since this is the direction in which movement will most frequently occur, primarily owing to the unevenness of the road or terrain over which the vehicle is driven. Movement of smaller amplitude may occur less frequently in the fore-and-aft direction, owing to acceleration and braking, and in the transverse direction, owing to cornering.

The bumper at the front or rear of the vehicle is fixed to the chassis frame in order to provide sufficient impact strength, but connection to the frame is not possible at the sides of the vehicle due to the aforementioned frame structure. For this reason the bumpers usually provided on such vehicles are pressed from sheet metal and fixed solely to the end of the frame. Such bumpers have sufficient rigidity and strength to support bumper end portions (wrap-arounds) extending alongside the vehicle. However, these bumpers are relatively heavy and expensive to produce. Furthermore, in view of the relative movement which can occur between the body and the frame, these bumpers have to have a relatively wide spacing from the body, which does not give a very neat appearance.

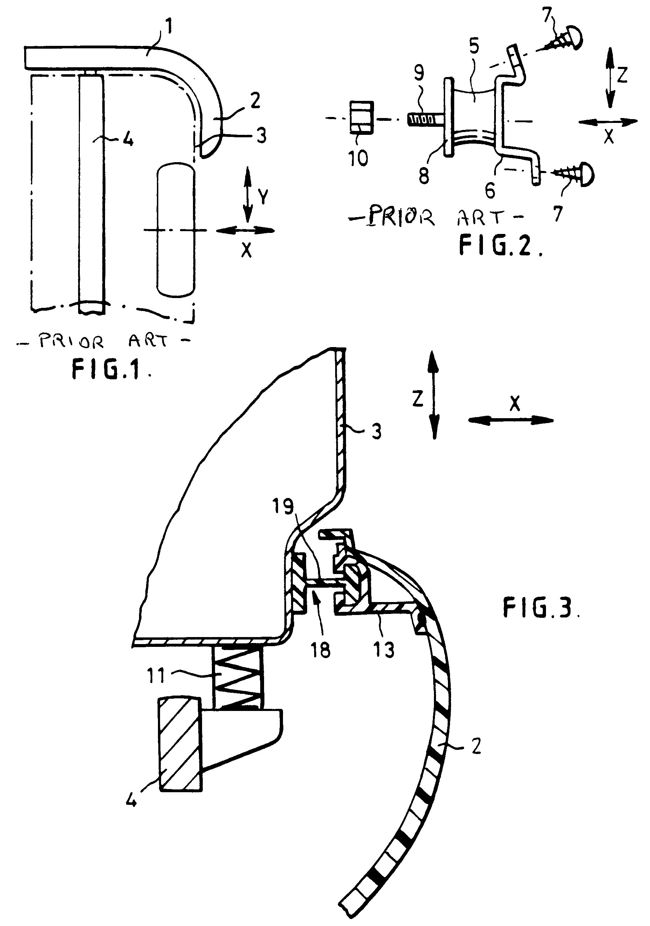

Referring to Figure 1 of the accompanying drawings, a plastic bumper 1 (similar to those used on the majority of saloon cars) does not have sufficient inherent rigidity to support the wrap-around end portion 2. Hence, each end portion 2 must, in addition to fixings to the chassis frame at the front of the vehicle, be mounted on the body 3 (in the absence of frame extensions in the wrap-around areas) in the wing or fender areas of the vehicle. However, if the plastic bumper 1 is rigidly mounted on the frame 4 and the body 3, relative movement of the frame and the body tends to cause the bumper 1 to crack, in particular around the additional mounting points at the fender areas. Therefore it is necessary to provide flexible mounts in these areas for frame-type vehicles.

Figure 2 shows a bonded rubber mount which has previously been proposed for this purpose. The mount comprises a steel plate 6, which is fixed to the plastic bumper by, for example, self-tapping screws 7, and a steel plate 8 bearing a welded threaded stud 9 which passes through a hole in the vehicle body and is secured by a nut 10. A rubber block 5, which is omnidirectionally flexible, is bonded to the plates 6,8. This mount is awkward to fit to the vehicle and is costly because of the number of parts involved and the expense of the steel-to-rubber bonding process. Because the freedom of movement provided by the mount is omnidirectional, a relatively large spacing must still be left between the bumper and the body, so that an aesthetically unpleasing appearance results.

There is an increasing demand for multi-purpose leisure vehicles designed for on-road and off-road use and provided with saloon-type bumpers. Therefore, what is desired is mounting means suitable for mounting saloon-type bumpers on such vehicles which satisfies both the functional and aesthetic requirements described above.

The present invention seeks to achieve these requirements by providing mounting means which permits limited relative movement of their body and the end portion of the bumper in a vertical direction but resists relative movement in the fore-and-aft and transverse directions.

To this end, a bumper mouting means in accordance with the present invention is characterised by the features specified in the characterising portion of claim 1.

Preferred and optional features of the invention are set forth in claims 2 et seq.

The invention will be described further, by way of example, with reference to the accompanying drawings, in which:
Figure 1 is a fragmentary schematic plan view of the front part of a frame type vehicle;
Figure 2 is an exploded rear-end view of a mount, according to the prior art, for connecting an end portion of a bumper to the side of a vehicle body;
Figure 3 is a fragmentary schematic vertical transverse section through the front part of a vehicle, showing the relationship between a chassis frame, a vehicle body, an end portion of a bumper, and a mount, in accordance with the present invention;
Figure 4 is a fragmentary horizontal transverse section through the bumper, the mount, and the body, taken on line IV-IV in Figures 5 and 6;
Figure 5 is a section taken on line V-V in Figures 4 and 6;
Figure 6 is a section taken on line VI-VI in Figure 4; and
Figure 7 is a rear-end view of an alternative embodiment of the mount.

In the drawings, the double-headed arrow X represents the transverse direction of a vehicle, Y the fore-and-aft direction, and Z the vertical direction.

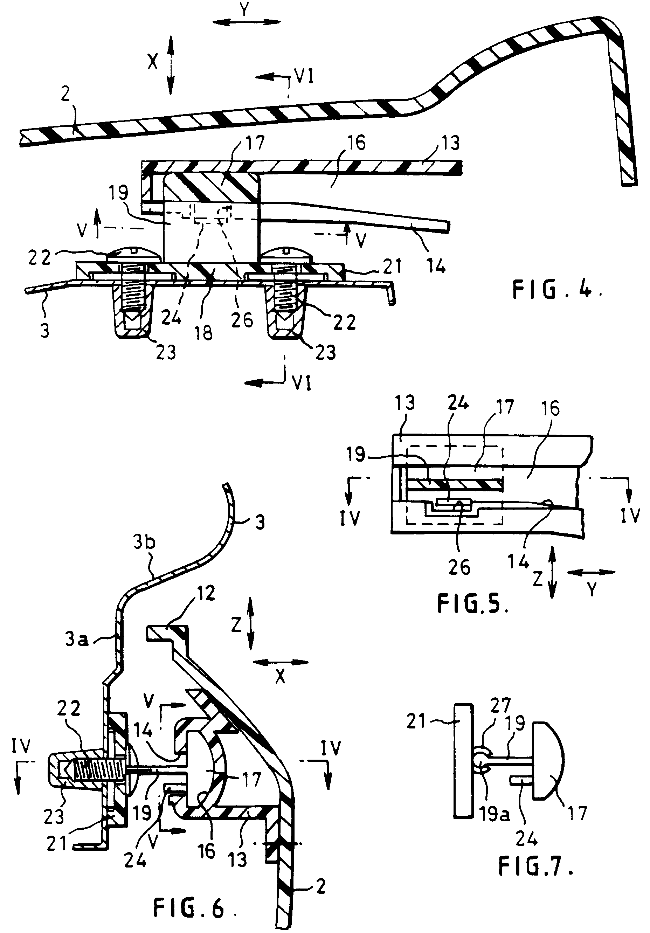

Referring to Figures 3 to 6 in conjunction with Figure 1, a bumper 1 is secured to the front end of a chassis frame 4 which carries a vehicle body 3 by way of suspension members 11 (only one of which is shown) which allow limited vertical movement of the body 3. The bumper 1 is made of polypropylene or another suitable plastics material and is produced by injection moulding. At each end it has a wrap-around portion 2 which extends rearwardly alongside the body. The upper edge of the end portion 2 has a flange 12 (Figure 6) which is spaced (e.g. by 6 ± 2 mm) from a vertical section 3a and (e.g. by 11 ± 2 mm) from an obliquely overhanging section 3b of the body 3. A plastics bracket 13 (e.g. polypropylene) is welded or bonded to the internal surface of the end portion 2).

The bracket 13 defines an undercut slot 14 communicating with an elongate cavity 16 for accommodating, as a friction fit, a head 17 which is an integral part of a one-piece mounting member 18. The slot 14 and cavity 16 are widened in the rearward direction and are open at the rear.

The head 17 is linked by a horizontal planar element 19 to an integral base 21 which is fixed on the outside of the body 3 by means of screws 22 which extend through holes in the body and engage in retaining elements 23. The mounting member is made of a resilient plastics material, such as a thermoplastic elastomer (polyester) sold under the trademark "Hytrel" (DuPont), and is produced by injection moulding. The thin linking element 19 is resiliently flexible; it can be bent out of its own plane and also forms an integral hinge connection between each of its opposite edge portions and the head 17 and the base 21 respectively. This allows limited relative movement of the bumper portion 2 and the body 3 in the vertical direction Z. However, in its own horizontal plane the linking element 19 is relatively rigid in compression, tension, and shear, so that it resists relative movement of the bumper portion 2 and the body 3 in the transverse and fore-and-aft directions (X,Y).

In fitting the bumper 1 to the vehicle, the bumper is offered up to the frame 4 and the body 3 from the front so that the head 17 of the mounting member 18 (which has previously been attached to the body by the screws 22) enters the open end of the longitudinal cavity 16, and the bumper is then pushed rearwards so that the head 17 jams in the cavity 16. The widened rear end of the cavity ensures that the bracket 13 can easily engage into the mounting member 18 during assembly of the vehicle without the assembly operator actually having sight of the mounting member 18. (As will be appreciated, with relatively small clearances between bumper and body and with the wrap-under extension of modern bumper designs, the engagement of the bumper mount, such as the bonded rubber mount shown in Figure 2, into its required fixing hole can be problematical and can require the bumper to be positively distorted as the bumper is offered to the body by outwardly flexing the wrap-around portions 2 to ensure that the threaded studs 9 do not score painted surfaces on the body which are not visible after assembly of the vehicle. ) In order to assist retention, the head 17 has an integral resiliently flexible projection or lug 24 which rides over the lower edge of the slot 14 and latches in a recess 26 provided in the lower edge of the slot 14. The bumper wrap-around portions 2 may therefore be easily and positively secured into position using a blind snap-fit operation.

Figure 7 shows a possible modification of the mounting member, in which one end portion 19a of the linking element 19 is enlarged and fits in a longitudinally slotted rib formation 27 on the base 21. The slot in the rib formation 27 may have a recess (not shown) which is engaged by a lug (not shown) on the edge portion 19a to retain it in the longitudinal direction.

A similar connection could be provided instead (or additionally) between the other edge portion of the linking element 19 and the head 17.

The connection 19a/27 may serve to some extent as a hinge, although this is not preferred. The end portion 19a may be a snap fit in the formation 27 and may be oval in cross-section. The connection can be arranged to separate when a threshold force is exceeded. This would provide secure retention of the bumper under normal driving conditions, while minimising damage to the bumper (and to the vehicle body) under impact.

Various modifications may be made within the scope of the invention. For example, two separate mounting members could be arranged one above the other and engage with respective brackets on the end portion of the bumper. The mounting member could have two (or more) planar linking elements arranged in parallel to provide enhanced transverse and fore-and-aft rigidity while allowing adequate vertical movement.

The above description is directed to a front bumper. A rear bumper can obviously be mounted on the vehicle in a similar manner.

## Claims

1. A bumper mounting (18) for mounting an end portion (2) of a bumper (2) on the body (3) of a vehicle having a chassis frame (4), means for suspending the body (3) on the frame (4), the bumper (1) being fixed on one end of the frame (4) and the end portion (2) extending alongside the body (3), the bumper mounting mounting means (18) including at least one linking element (19) which extends in a transverse direction (X) with respect to the vehicle, the linking element (19) having first and second opposite edge portions which are connected to the body (3) and the said end portion (2) of the bumper (1) respectively, characterised in that the linking element (19) is substantially planar and extends in a fore-and-aft direction (Y) as well as the transverse direction (X) for enabling the mounting means (18) to permit limited relative movement of the body (3) and the said end portion (2) in a vertical direction (Z) but resisting relative movement in the fore-and-aft and transverse directions (Y,X).

2. A bumper mounting as claimed in claim 1, in which the linking element (19) is flexible.

3. A bumper mounting as claimed in claim 2, in which the linking element (19) is resiliently flexible.

4. A bumper mounting as claimed in any preceding claim, in which the mounting means (18) includes a base (21) and a head (17) to which the said first and second edge portions of the linking element (19) are connected, the base being (21) fixed to the body (3) and the head (17) being fixed to the bumper (1).

5. A bumper mounting as claimed in claim 4, in which the linking element (19) is connected to the base (21) and/or the head (17) by a hinge.

6. A bumper mounting as claimed in claim 4 or 5, in which the linking element (19) is integral with the base (21) and/or the head (17).

7. A bumper mounting as claimed in any of claims 4 to 6, in which at least one of the said edge portions is enlarged and fits in a slot in the base (21) or head (17).

8. A bumper mounting as claimed in any of claims 4 to 7, in which the head (17) is an interference fit in a longitudinal cavity (16) extending in the fore-and-aft direction (Y) in a bracket (13) on the bumper (1), the linking element (19) extending out of the cavity (16) through a longitudinal slot (14) in the bracket (13), at least one end of the cavity (16) and slot (14) being open to allow fitting and unfitting of the head (17) and the bracket (13) in relation to each other.

9. A bumper mounting as claimed in claim 8, in which the cavity (16) widens towards the open end to facilitate fitting.

10. A bumper mounting as claimed in claim 8 or 9, in which the head (17) carries a projection (24) which engages in a recess (26) in one edge of the slot (14) in the bracket (13).

11. A bumper mounting as claimed in any of claims 8 to 10, in which the bracket (13) is made of plastics material, e.g. polypropylene.

12. A bumper mounting as claimed in any preceding claim, in which the linking element (19) is made of plastics material, e.g. a polyester.

13. A bumper mounting as claimed in any preceding claim, in which the bumper (1) is made of plastics material, e.g. polypropylene.

## Patentansprüche

1. Stoßstangenbefestigung (18) zur Befestigung eines Endabschnitts (2) eines Stoßdämpfers (1) an der Karosserie (3) eines Fahrzeugs, das einen Fahrgestellrahmen (4) und Mittel zur Aufhängung der Karosserie (3) am Rahmen (4) hat, wobei der Stoßdämpfer (1) an einem Ende des Rahmens befestigt (4) ist und sich der Endabschnitt (2) längs der Karosserie (3) erstreckt, wobei das Stoßstangen-Befestigungsmittel (18) wenigstens ein Verbindungselement (19) einschließt, das im Verhältnis zum Fahrzeug in einer Querrichtung (X) verläuft, wobei das Verbindungselement (19) erste und zweite gegenüberliegende Randabschnitte hat, die mit der Karosserie (3) bzw. dem Endabschnitt (2) der Stoßstange (1) verbunden sind, dadurch gekennzeichnet, daß das Verbindungsmittel (19) im wesentlichen plan ist und sich sowohl in einer Richtung von vorn nach hinten (Y) als auch in der Querrichtung (X) erstreckt, um das Befestigungsmittel (18) in die Lage zu versetzen, eine begrenzte relative Bewegung der Karosserie (3) und des Endabschnitts (2) in einer senkrechten Richtung (Z) zuzulassen, einer relativen Bewegung in der Längs- und in der Querrichtung (Y, X) aber zu widerstehen.

2. Stoßdämpferbefestigung nach Anspruch 1, bei der das Verbindungselement (19) flexibel ist.

3. Stoßdämpferbefestigung nach Anspruch 2, bei der das Verbindungselement (19) federnd flexibel ist.

4. Stoßdämpferbefestigung nach einem der vorhergehenden Ansprüche, bei der das Befestigungsmittel (18) eine Basis (21) und einen Kopf (17) einschließt, mit denen der erste und der zweite Randabschnitt des Verbindungselements (19) verbunden sind, wobei die Basis (21) an der Karosserie (3) befestigt ist und der Kopf (17) am Stoßdämpfer (1) befestigt ist.

5. Stoßdämpferbefestigung nach Anspruch 4, bei der das Verbindungselement (19) durch ein Gelenk mit der Basis (21) und/oder dem Kopf (17) verbunden ist.

6. Stoßdämpferbefestigung nach Anspruch 4 oder 5, bei der das Verbindungselement (19) mit der Basis (21) und/oder dem Kopf (17) aus einem Teil besteht.

7. Stoßdämpferbefestigung nach einem der Ansprüche 4 bis 6, bei der wenigstens einer der Randabschnitte vergrößert ist und in einen Schlitz in der Basis (21) oder dem Kopf (17) paßt.

8. Stoßdämpferbefestigung nach einem der Ansprüche 4 bis 7, bei welcher der Kopf (17) eine Preßpassung in einem länglichen Hohlraum (16) bildet, der sich in Längsrichtung (Y) in einer Halterung (13) am Stoßdämpfer (1) erstreckt, wobei das Verbindungselement (19) durch einen Längsschlitz (14) in der Halterung (13) aus dem Hohlraum (16) heraus reicht, wobei zumindest ein Ende von Hohlraum (16) und Schlitz (14) offen sind, um das Einfügen und Herausnehmen des Kopfes (17) und der Halterung (13) im Verhältnis zueinander zu ermöglichen.

9. Stoßdämpferbefestigung nach Anspruch 8, bei der sich der Hohlraum (16) zum offenen Ende hin aufweitet, um das Einfügen zu erleichtern.

10. Stoßdämpferbefestigung nach Anspruch 8 oder 9, bei welcher der Kopf (17) einen Vorsprung (24) trägt, der in eine Aussparung (26) in einen Rand des Schlitzes (14) in der Halterung (13) eingreift.

11. Stoßdämpferbefestigung nach einem der Ansprüche 8 bis 10, bei der die Halterung (13) aus einem Plastmaterial, z. B. Polypropylen, hergestellt wird.

12. Stoßdämpferbefestigung nach einem der vorhergehenden Ansprüche, bei dem das Verbindungselement (19) aus einem Plastmaterial, z. B. Polyester, hergestellt wird.

13. Stoßdämpferbefestigung nach einem der vorhergehenden Ansprüche, bei welcher der Stoßdämpfer (1) aus einem Plastmaterial, z. B. Polypropylen, hergestellt wird.

## Revendications

1. Fixation de pare-chocs (18) destinée à monter une partie d'extrémité (2) d'un pare-chocs (2) sur la carrosserie (3) d'un véhicule, comportant un châssis (4), un moyen pour suspendre la carrosserie (3) sur le châssis (4) le pare-chocs (1) étant fixé sur une extrémité du châssis (4) et la partie d'extrémité (2) s'étendant le long de la carrosserie (3), le moyen de montage du pare-chocs (18) englobant au moins un élément de liaison (19) s'étendant dans une direction transversale (X) par rapport au véhicule, l'élément de liaison (19) comportant des première et deuxième parties de bordure opposées connectées respectivement à la carrosserie (3) et à ladite partie d'extrémité (2) du pare-chocs (1), caractérisée en ce que l'élément de liaison (19) est pratiquement plan et s'étend dans la direction allant vers l'avant et vers l'arrière (Y) ainsi que dans la direction transversale (X), pour permettre au moyen de montage (18) d'admettre le déplacement limité relatif de la carrosserie (3) et de ladite partie d'extrémité (2) dans une direction verticale (Z), mais de résister au déplacement relatif dans les directions allant vers l'avant et vers l'arrière ainsi que dans la direction transversale (Y, X).

2. Fixation de pare-chocs selon la revendication 1, dans laquelle l'élément de liaison (19) est flexible.

3. Fixation de pare-chocs selon la revendication 2, dans laquelle l'élément de liaison (19) est flexible élastiquement.

4. Fixation de pare-chocs selon l'une quelconque des revendications précédentes, dans laquelle le moyen de montage (18) englobe une base (21) et une tête (17), auxquelles sont connectées lesdites première et deuxième parties de bordure de l'élément de liaison (19), la base (21) étant fixée à la carrosserie (3) et la tête (17) étant fixée au pare-chocs (1).

5. Fixation de pare-chocs selon la revendication 4, dans laquelle l'élément de liaison (19) est connecté à la base (21) et/ou à la tête (17) par une articulation.

6. Fixation de pare-chocs selon les revendications 4 ou 5, dans laquelle l'élément de liaison (19) fait partie intégrante de la base (21) et/ou de la tête (17).

7. Fixation de pare-chocs selon l'une quelconque des revendications 4 à 6, dans laquelle au moins une desdites parties de bordure est agrandie et fixée dans une fente dans la base (21) ou la tête (17).

8. Fixation de pare-chocs selon l'une quelconque des revendications 4 à 7, dans laquelle la tête (17) est ajustée par serrage dans une cavité longitudinale (16) s'étendant dans la direction allant vers l'avant et vers l'arrière (Y) dans une console (13) sur le pare-chocs (1), l'élément de liaison (19) s'étendant au-dehors de la cavité (16) à travers une fente longitudinale (14) dans la console (13), au moins une extrémité de la cavité (16) et de la fente (14) étant ouverte pour permettre le montage et le démontage de la tête (17) par rapport à la console (13).

9. Fixation de pare-chocs selon la revendication 8, dans laquelle la cavité (16) est élargie en direction de l'extrémité ouverte pour faciliter le montage.

10. Fixation de pare-chocs selon les revendications 8 ou 9, dans laquelle la tête (17) supporte une saillie (24) s'engageant dans un évidement (26) dans un bord de la fente (14) dans la console (13).

11. Fixation de pare-chocs selon l'une quelconque des revendications 8 à 10, dans laquelle la console (13) est composée de plastique, par exemple de polypropylène.

12. Fixation de pare-chocs selon l'une quelconque des revendications précédentes, dans laquelle l'élément de liaison (19) est composé de plastique, par exemple de polyester.

13. Fixation de pare-chocs selon l'une quelconque des revendications précédentes, dans laquelle le pare-chocs (1) est composé de plastique, par exemple de polypropylène.
